# EUROPEAN PATENT SPECIFICATION

(11) **EP 0 862 666 B1**
(45) Date of publication and mention of the grant of the patent: **09.08.2000**
(21) Application number: 96938180.5
(22) Date of filing: 12.11.1996
(51) Int. Cl.: D04H 1/00, C12P 7/62, D04H 1/58

(54) **COMPOSITES OF POLYHYDROXY FATTY ACIDS AND FIBROUS MATERIALS**
VERBUNDWERKSTOFFE AUS POLYHYDROXYFETTSÄUREN UND FASERMATERIALIEN
MATERIAUX COMPOSITES D'ACIDES GRAS POLYHYDROXY ET DE MATIERES FIBREUSES

(30) Priority: 23.11.1995 DE 19543635
(43) Date of publication of application: 09.09.1998
(73) Proprietor: HP-CHEMIE PELZER RESEARCH & DEVELOPMENT Ltd., Waterford, County Waterford (IE)
(72) Inventor: PELZER, Helmut, D-58454 Witten (DE); STEINBÜCHEL, Alexander, D-58454 Witten (DE)
(74) Representative: Jönsson, Hans-Peter, Dr.Dipl.-Chem.
(86) International application number: PCT/EP96/04939
(87) International publication number: WO 97/19212

(56) References cited:
- EP-A- 0 444 880
- WO-A-92/05311
- US-A- 5 191 037
- US-A- 5 350 627
- PATENT ABSTRACTS OF JAPAN vol. 018, no. 385 (C-1227), 20.Juli 1994 & JP 06 107935 A (SHOWA HIGHPOLYMER CO LTD), 19.April 1994, & DATABASE WPI Section Ch, Week 9420 Derwent Publications Ltd., London, GB; Class A23, AN 94-164139 & JP 06 107 935 (SHOWA HIGH POLYMER) , 19.April 1994
- PATENT ABSTRACTS OF JAPAN vol. 095, no. 008, 29.September 1995 & JP 07 119098 A (SHOWA HIGHPOLYMER CO LTD), 9.Mai 1995, & DATABASE WPI Section Ch, Week 9527 Derwent Publications Ltd., London, GB; Class A23, AN 95-204529 & JP 07 119 098 (SHOWA HIGH POLYMER) , 9.Mai 1995
- PATENT ABSTRACTS OF JAPAN vol. 017, no. 339 (C-1075), 28.Juni 1993 & JP 05 041923 A (RAKUTOU KASEI KOGYO KK;OTHERS: 01), 23.Februar 1993, & DATABASE WPI Section Ch, Week 9313 Derwent Publications Ltd., London, GB; Class D16, AN 93-103567 & JP 05 041 923 (DAIKA JAPAN;RAKUTO KASEI KOGYO) , 23.Februar 1993

## Description

Die vorliegende Erfindung betrifft ein Verfahren zur Herstellung eines Vei bundwerkstoffes sowie dessen Verwendung zur Herstellung von Formteilen im Automobilbereich.

Verbundwerkstoffe beispielsweise Textilfaservliese bestehen aus Fasermaterialien und einem verknüpfenden Bindemittel. Als Bindemittel werden dabei hauptsächlich Phenolharze verwendet, deren Umweltverträglichkeit jedoch zweifelhaft ist.

US-5,350,627 A beschreibt die Verwendung von biologisch abbaubaren Polymeren als Bindemittel zur Imprägnierung oder Beschichtung von faserförmigen Geweben. Das resultierende Gewebe ist biologisch abbaubar, so daß die Faser innerhalb des Gewebes einfach wiederverwendet werden kann. Die beschriebenen Bindemittelpolymere weisen Molekulargewichte von mehr als 30000 und insbesondere mehr als 50000 auf und umfassen beispielsweise Polymere von Milchsäure, Glycolsäure, Hydroxybuttersäure und Hydroxyvaleriansäure.

In DE 44 16 357 A1 wird eine Wundauflage für medizinische Anwendungen bestehend aus einem Trägermaterial aus pflanzlichen und/oder tierischen Fasern und/oder Fasern aus Polymerstoffen und einem die Fasern im wesentlichen einhüllendes und/oder verstärkendes Polymermaterial beschrieben, wobei das Polymermaterial aus einer Polyhydroxybuttersäure besteht und diese zwischen 1 und 50 Masse-%, bezogen auf die Gesamtmasse der Wundauflage darstellt.

Textilfaservliese sind im Automobilbereich ein häufig verwendeter Konstruktionswerkstoff mit breitem Eigenschaftsspektrum. Beispielweise wird Phenolharz-gebundenes Textilvlies seit langem unter anderem wegen seiner guten Dämpfungseigenschaften als Werkstoff für tragende und verkleidete Teile (rein oder als Verbundwerkstoff) in der Automobilindustrie im PKW- und LKW-Bau eingesetzt. Als kostengünstige Flachware diente dieses Produkt zunächst und ausschließlich Polsterzwecken. In jüngster Zeit stellte sich dieser Werkstoff jedoch in einer Reihe von Varianten dar, und ist vielseitig verwendbar. Formteile werden besonders bevorzugt.

Phenolharz-gebundenes Textilvlies ist in Rohdichten von 50 bis 1000 kg/cm³ bei Dicken von 5 bis 30 mm im Handel erhältlich. Es ist als sogenanntes Porenkomposit, bestehend aus drei Phasen (Baumwolle, gehärtetes Phenolharz und Luft) zu beschreiben - ein Konstruktionswerkstoff, dessen Eigenschaftsprofil in weiten Grenzen modifiziert werden kann. Baumwolle hat die Faserform, Phenolharz liegt punktförmig, auch netzflächig als eine Art Matrix vor.

Durch besondere Auswahl der Vliesstoffe kann die Akustik und die Festigkeit des Verbundwerkstoffs besonders gesteuert werden. Besonders bevorzugte Materialien zur Herstellung des Vliesstoffes sind Glasfaser-verstärkte oder Glasgitter-verstärkte Fasermaterialien, insbesondere Bindemittel enthaltende Textilvliese, vorzugsweise solche, die aus einem Baumwollmischgewebe bestehen. Diese Vliese werden durch Pressen bei erhöhter Temperatur auf die gewünschte Festigkeit gebracht.

Die besonderen Eigenschaften und die Leistungsfähigkeit dieser letztgenannten Produktgruppe erklären sich aus der chemischen und morphologischen Struktur der Baumwolle, sowie dem Duroplastcharakter der ausgehärteten Phenolharze, die üblicherweise als Bindemittel der Baumwollmischgewebevliese eingesetzt werden. Weitere Einflußgrößen sind die Verformbarkeit, die Bügelfähigkeit der Baumwolle, die statistische Bindepunkthäufigkeit und auch die Laminat- und/oder Mantelwirkung der längs von Fasern haftenden und so auch auskondensierten Bindemittelmoleküle.

Die Baumwolle übersteht den Fertigungsprozeß praktisch ohne Veränderung ihrer physikalisch-chemischen Eigenschaftsmerkmale. Sie verleiht dem Produkt besondere Qualitätsmerkmale wie Schall-Absorptionsfähigkeit, gute mechanische Festigkeitswerte, Schlagzähigkeit und Splitterfestigkeit in der Kälte.

Besonders bevorzugte Bindemittel für die Vliesstoffe sind ausgewählt aus Phenol-Formaldehyd-Harzen, Epoxidharzen, Polyesterharzen, Polyamidharzen, Polypropylen, Polyethylen und/oder Ethylvinylacetatcopolymeren. Phenolharze haben nach der Härtung die typischen Duroplasteigenschaften, die sich auf das Fertigprodukt übertragen. Das Textilvlies wird aus der Reißbaumwolle und dem pulvrigen Phenolharz üblicherweise auf trockenem Wege hergestellt. Die Aushärtung erfolgt entweder im Heizkanal oder über das ungehärtete Halbzeug als Zwischenstufe in der Presse. Für die Teile, die im Fahrzeugraum Verwendung finden sollen, wird ausgewähltes Textil eingesetzt.

Weiterhin bekannt sind Holzfaservlieswerkstoffe als ein Holzwerkstoff, zu dessen Herstellung man zerspantes und gehacktes Abfallholz mit Hilfe von Dampfdruck und Wärme zu einem Faserbrei verarbeitet. Dabei werden einige Cellulosebindungen aufgeschlossen. Dem Brei mischt man üblicherweise geringe Mengen an Bindemittel aus Kunstharz (z. B. Phenol-, Alkyl-, Harnstoff-Harze), Flammschutzmittel, Schädlingsbekämpfungsmittel (gegen Insekten und Pilzbefall) und dergleichen bei, formt den Brei auf Formmaschinen zu meist plattenförmigen Faserplatten und entwässert.

Derartige Holzfaservlieswerkstoffe werden als Dämmstoffe gegen Kälte, Wärme und Schall, als Zwischenwände, Tisch- und Fußbodenbeläge usw. auch lackiert und mit Kunstharzfilm beschichtet.

Im Verlauf des Herstellungsprozesses wird das Holz-Fasermaterial geformt, verdichtet und gepreßt. Hierbei wird primär die Verfilzung der Fasern und deren natürliche Bindekraft genutzt. Durch Zugabe von Binde- und Hydrophobierungsmitteln sowie durch thermische und andere Nachbehandlungen lassen sich die Bindekräfte erhöhen. So können die physikalischen und die Festigkeitseigenschaften dem Verwendungszweck angepaßt werden.

Nach DIN 68753 unterscheidet man bei Holzfaserwerkstoffen folgende Arten: harte Holzfaserplatten mit einer Rohdichte von mehr als
800 kg/m³,
mittelharte Holzfaserplatten mit einer Rohdichte von mehr als 350 kg/m³ bis 800 kg/m³ und
poröse Holzfaservlieswerkstoffe, auch Isolier- oder Dämmplatten genannt, mit einer Rohdichte von 250 bis 350 kg/m³.

Aus dem Derwent Abstract 90-168 964 und der damit korrespondierenden JP-A-0 211 15 03, sind Formkörper bekannt, die aus Holzfasern und Bindemitteln sowie Glasfasermatten in einem laminierten Zustand bestehen. Der Formkörper wird für Innenauskleidungsteile von Automobilen und elektrischen Schaltschränken verwendet. Dem Material werden gute Dimensionsstabilität und verbesserte Festigkeit sowie akustische Absorptionseigenschaften zugeschrieben.

Das holzartige Formmaterial wird hergestellt durch Zugabe von 5 bis 30 Gew.-% eines phenolischen Bindemittels zur Bindung der holzartigen Fasern. Glasfasermatten werden dadurch erhalten, daß man diese ebenfalls mit einer Phenolharzlösung imprägniert und anschließend trocknet. Die Glasfasermatten werden dann auf einer porösen Platte plaziert und das holzartige Formmaterial auf die Matte aufgesprüht Nachdem das holzartige Formmaterial die erwünschte Dicke erreicht hat, wird das Aufsprühen gestoppt und eine Platte aufgebracht, um ein Verbundmaterial zu erhalten. Dieses wird in einem Formwerkzeug unter Druck zu einem Kraftfahrzeughimmel-Grundmaterial geformt.

Weiterhin ist von einer großen Zahl von Bakterien bekannt, daß sie unter geeigneten Wachstumsbedingungen, bei denen ein Überschuß einer Kohlenstoffquelle, gleichzeitig aber ein Mangel an einem essentiellen Nährsalz im Medium vorliegt, intrazellulär große Mengen Polyhydroxyfettsäuren (PHF) speichern. Eine Übersicht ist in A. Steinbüchel, "Polyhydroxyalkanoic acids" In: D. Byrom, Hrsg., Biomaterials, Macmillan Publishers Ltd., Basingstoke, S. 123-213 (1991) gegeben. Diese Polyhydroxyfettsäuren stellen in der Regel lineare Polyester aus 3-Hydroxyfettsäuren dar, wobei in Einzelfällen auch 4-Hydroxy- oder 5-Hydroxyfettsäuremonomere gefunden werden. Die Eigenschaften der bakteriellen Polymere hängen entscheidend von der Länge der Seitenkette der Monomere und von den Monomerkombinationen ab. So ist Poly-3-hydroxybuttersäure (PHB) hart und spröde, während Poly-3-hydroxydecansäure (PHD) gummiartig verformbar ist. Meist bestehen die Polyester aus Einheiten mehrerer Monomeren mit unterschiedlichen Zusammensetzungen. Bei einigen Polymeren, wie beispielsweise Copoly-3-hydroxybuttersäure-3-hydroxyvaleriansäure (PHB/HV), kann die Stoffmengen-Zusammensetzung bei der mikrobiologischen Herstellung durch die Zugabe von unterschiedlichen Kohlenstoffquellen gesteuert werden. In anderen Polymeren, wie PHD (bestehend aus 30 mol% 3-Hydroxyoctanoat, 50 mol% 3-Hydroxydecanoat, 10 mol% 3-Hydroxydodecanoat und weiteren gesättigten und ungesättigten 3-Hydroxyfettsäuren) sind der Variabilität teilweise enge Grenzen gesetzt. Technische Anwendungen dieser Polymere sind jedoch nicht vorhanden.

Das Problem der vorliegenden Erfindung bestand darin, die genannten und gegebenenfalls neuen Polyhydroxyfettsäuren einer neuen Verwendung im Automobilbereich in Form eines Bindemittels für Verbundwerkstoffe zuzuführen, die gegenüber Phenolharzen eine bessere biologische Abbaubarkeit zeigen, aus natürlichen Rohstoffen leicht herstellbar ist und eine gleiche oder erhöhte mechanische Stabilität des Verbundwerkstoffes gegenüber bekannten Werkstoffen des Automobilbereichs gewährleistet.

Überraschenderweise wurde gefunden, daß sich Polymere von Hydroxyfettsäuren als Bindemittel für Verbundwerkstoffe im Automobilbereich eignen.

Gegenstand der Erfindung ist demgemäß in einer ersten Ausführungsform ein Verfahren zur Herstellung eines Verbundwerkstoffes aus Fasermaterial und Bindemittel aus einem Polymer von Hydroxyfettsäuren, deren Monomere abgeleitet sind von gesättigten oder ungesättigten 3-Hydroxyfettsäuren mit 4 bis 16 Kohlenstoffatomen im Fettsäurerest, dadurch gekennzeichnet, daß das Polymer aus Hydroxyfettsäuren produzierende Mikroorganismen in Anwesenheit von Fasermaterial und einer weiteren Kohlenstoffquelle angezogen, die Bakterien mitsamt den Fasern geerntet und im getrockneten oder feuchten Zustand, gegebenenfalls unter Einsatz weiteren Fasermaterials zu Verbundwerkstoffen gepreßt werden. Eine weitere Ausführungsform besteht in der Verwendung des obengenannten Verbundwerkstoffes aus Fasermaterial und Bindemittel aus einem Polymer von Hydroxyfettsäuren zur Herstellung von Formteilen im Automobilbereich, insbesondere zu akustischen Dämpfung in den Bereichen Motorhaube, Stirnwand (beidseitig), Tunnel, Tür, Dach, Fußraum, Pumpen, A- bis D-Säule und Lüftungskanal und als gegebenenfalls selbsttragende Basis für Innenauskleidungen, insbesondere für Armaturenabdeckungen, Tunnelverkleidungen, Türverkleidungen, Rückenlehnenverkleidungen, A-Bis D-Säulenverkleidungen und Reserveradabdeckungen sowie als Teile mit Doppelfunktion insbesondere als Dachhimmel, Hutablage, Füllstück, Kofferraummatte oder Radhausverkleidung.

Mit Hilfe der vorliegenden Erfindung ist es möglich, neue biologisch abbaubare Verbundwerkstoffe für den Automobilbereich zur Verfügung zu stellen.

Die Verbundwerkstoffe sind durch die besonderen Eigenschaften wie die hohe Steifigkeit zur Herstellung von Textilfaservliesen, insbesondere Glasfaser-verstärkten oder Glasgitter-verstärkten Fasermaterialien und Baumwollvliesen besonderes geeignet. Hier ist ein teilweise oder vollständiger Ersatz der üblicherweise eingesetzten Phenolharzbindemittel möglich.

Das eingesetzte Bindemittel verleiht den Verbundwerkstoffen akustische Eigenschaften, die sich aus der Porosität des Materials ergeben, wodurch den Materialien eine besondere Eignung für den Automobilbereich zukommt.

Verbundwerkstoffe im Sinne der vorliegenden Erfindung enthalten vorzugsweise Naturfasern, insbesondere ausgewählt aus Lachs, Sisal, Hanf, Holzwolle, Holzschliff, Holzfasern, Kokosfasern, Watte, Heu, Stroh, Sägemehl, Hobelspänen, Kiefernspänen, Spelzen, Samenresten, Haferflocken, Getreide, Kleie, Papierstreifen und Baumwollereste aber auch Kunstfasern, wie Polybutylenterephthalate, Polyethylenterephthalate, Nylon 6, Nylon 66, Nylon 12, Viskose oder Rayon als Textilfaser.

Die Polymere von Hydroxyfettsäuren, die gemäß der vorliegenden Erfindung als Bindemittel in Verbundwerkstoffen eingesetzt werden, leiten sich vorzugsweise von gesättigten oder ungesättigten 3-Hydroxyfettsäuren mit 4 bis 16 Kohlenstoffatomen im Fettsäurerest ab. Wird die Kettenlänge des Fettsäurerestes beispielsweise durch die biologischen Bedingungen bei der Herstellung der Polymeren zu kurz gewählt, so wird das Polymer zu spröde, während ein langer Kohlenstoffrest dazu führt, daß die Festigkeit des Materials abnimmt.

Neben Homopolymeren aus einem Monomer von Hydroxyfettsäuren ist es beispielsweise durch die Auswahl der mikrobiologischen Bedingungen möglich, Gemische von Polyhydroxyfettsäuren und somit auch Copolymere oder auch Terpolymere zu erhalten.

Besonders bevorzugt besteht das Polymer von Hydroxyfettsäuren aus Poly-3-hydroxybuttersäure (PHB), Copolymer-poly-3-hydroxybuttersäure-3-hydroxyvaleriansäure (PHB/HV) in etwa äquimolen Anteilen und Poly-3-hydroxydodecansäure oder Gemischen derselben.

Die Art und Menge der einzusetzenden Bindemittel wird im wesentlichen durch den Anwendungszweck des Verbundwerkstoffes bestimmt. So wird im allgemeinen der Einsatz von 5 bis 50 Gew.-%, insbesondere 20 bis 40 Gew.-% bezogen auf den Verbundwerkstoff sinnvoll sein. Für den Fall, daß noch weitere an sich übliche Bindemittel in dem Verbundwerkstoff eingesetzt werden sollen, ist es jedoch möglich, die Menge des erfindungsgemäßen Bindemittels zu vermindern.

Der Kern der vorliegenden Erfindung besteht in der besonderen Eignung der Polymeren von Hydroxyfettsäuren zur Herstellung von Verbundwerkstoffen im Automobilbereich.

Die genannten Verbundwerkstoffe können dadurch erhalten werden, daß man das Fasermaterial mit dem Bindemittel in Kontakt bringt und anschließend zu dem Verbundwerkstoff verpreßt. Hierbei werden die Fasermaterialien mit den Bindemitteln in geeigneter Weise kombiniert und durch Verpreßen bei einer Temperatur im Bereich der Raumtemperatur oder oberhalb des Schmelzbereiches des Bindemittels, jedoch unterhalb des Zersetzungsbereichs des Bindemittels erhalten. Besonders bevorzugt im Sinne der vorliegenden Erfindung ist ein Temperaturbereich von 120 bis 250°C, insbesondere 180 bis 250°C, da bisher im Stand der Technik verwendete Verbundwerkstoffe, insbesondere Textilfaservliese im Automobilbereich auch bei einer derartigen Temperatur gepreßt werden.

Die mikrobiologische Herstellung der Polymeren von Hydroxyfettsäuren mittels Mikroorganismen ist an sich bekannt. Hierzu ist es möglich, die im Handel frei zugängliche Mikroorganismen einzusetzen und durch geeignete Verfahren zu vermehren.

Eine Möglichkeit der Herstellung von Verbundwerkstoffe besteht darin, daß man das Fasermaterial mit isoliertem und gereinigtem Polymer von Hydroxyfettsäuren vermischt und bei entsprechender Temperaturführung verpreßt. Hierbei wird ein besonders reiner, optisch ansprechender Verbundwerkstoff erhalten, der im Sichtbereich gegebenenfalls ohne Kaschierung eingesetzt werden kann.

Eine weitere Möglichkeit zur Herstellung von Verbundmaterialien besteht darin, das Fasermaterial mit getrockneten Polymer von Hydroxyfettsäuren enthaltenen Mikroorganismen oder einer Paste derselben zu vermischen. Hier wird also der Mikroorganismus nicht von den Polymeren von Hydroxyfettsäuren befreit, sondern zusammen mit diesem in dem Verbundwerkstoff eingearbeitet.

Das erfindungsgemäße Herstellungsverfahren besteht darin, die Polymere von Hydroxyfettsäuren produzierenden Mikroorganismen in Anwesenheit des Fasermaterials der herzustellenden Verbundwerkstoffe und einer weiteren Kohlenstoffquelle anzuziehen, die Bakterien samt den Fasern zu ernten und in getrocknetem oder feuchten Zustand, gegebenenfalls unter Einsatz weiteren Fasermaterials und Verbundwerkstoffen zu pressen. Hier wird also das Fasermaterial selbst teilweise als Nahrungsmittel für die Mikroorganismen eingesetzt. Bei dieser Verfahrensweise wurde die Freisetzung von PHF-Granalien aus Zellen von alcaligenes eutrophus in Gegenwart feinverteilt vorliegender Cellulosefasern beobachtet.

Eine weitere erfindungsgemäße Möglichkeit der Herstellung der Verbundmaterialien besteht darin, ohne weitere Kohlenstoffquelle die Mikroorganismen anzuziehen, wobei das Fasermaterial allein als Kohlenstoffquelle dient.

Besonders bevorzugt im Sinne der vorliegenden Erfindung wird ein PHF-Synthesegenexprimierender-rekombinanter Mikroorganismus eingesetzt.

Die vorliegende Erfindung wird durch die nachfolgenden Beispiele näher erläutert:

### Beispiele

### Beispiel 1:

Die Fähigkeit zur Herstellung Poly-3-hydroxydecansäure (PHD) ist auf die taxonomische Gruppe der Pseudomonaden beschränkt. Da jedoch Polyester wie PHD oder das nahe verwandte Poly-3-hydoxyoctanoat (PHO) bislang nicht in größeren Mengen hergestellt wurden, mußte zunächst ein geeigneter Stamm für die Produktion gefunden werden. Hierzu wurden zunächst im Handel frei erhältliche Stämme der Gattung Pseudomonas auf die Verwertung von preiswerten Substraten wie Gluconat, Glucose oder Saccharose (Haushaltszucker) sowohl auf festen Medien, wie auch in Flüssigkultur getestet (Tab. 1). Zur Kultivierung wurde ein definiertes Mineralmedium nach Schlegel et al. (1961) mit der im folgendem aufgeführten Zusammensetzung eingesetzt.

Die nachfolgend in der Tabelle genannten Stämme sind der Öffentlichkeit frei zugänglich, da diese bei der Deutschen Sammlung von Mikroorganismen und Zellkulturen (DSM) in Braunschweig geführt werden. Anstelle der genannten Stämme führen auch andere hinterlegte Stämme zu vergleichbaren Ergebnissen.

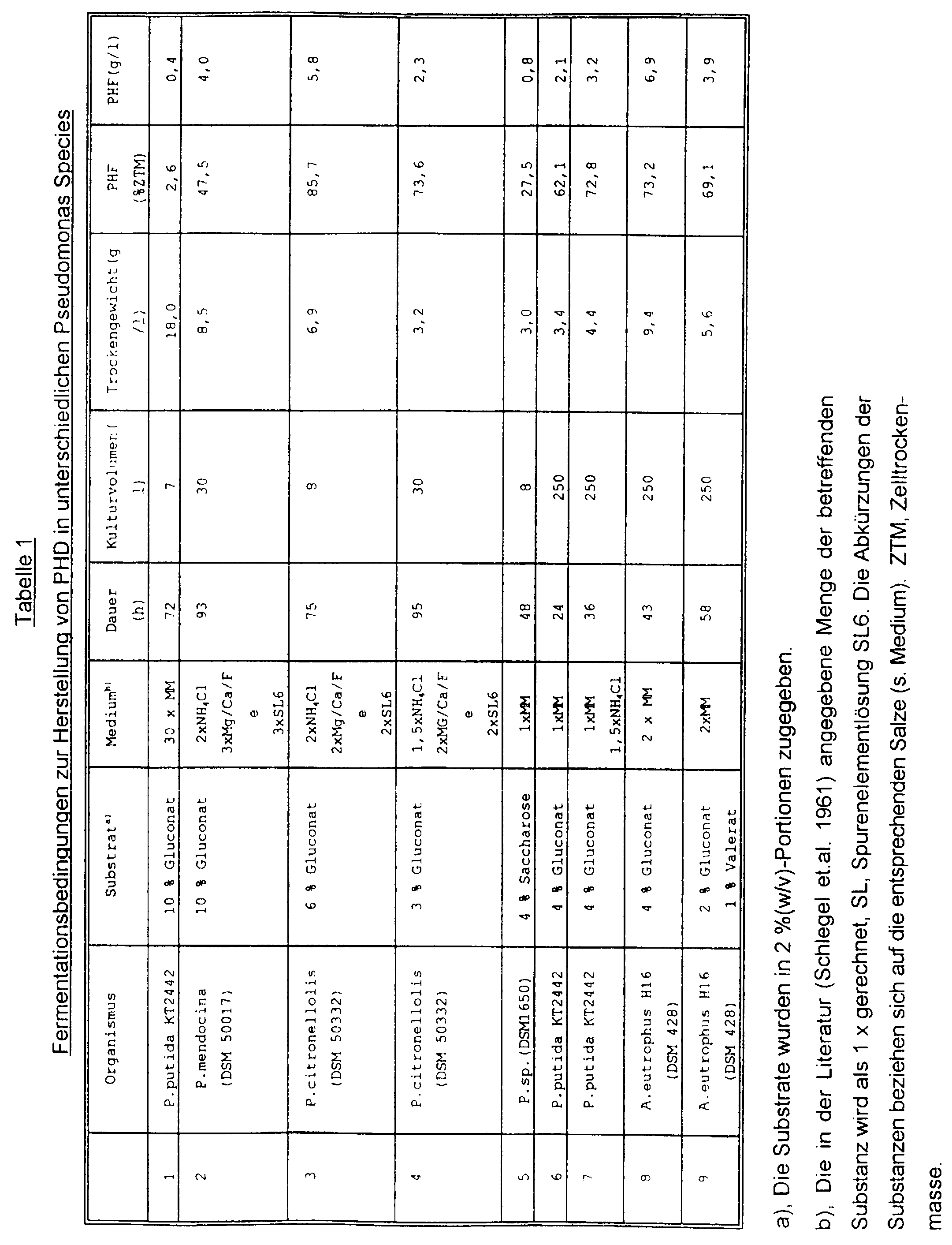

Mineralmedium (Schlegel et al. 1961):
Na₂HPO₄ x 12 H₂O = 9,00 g
KH₂PO₄ = 1,50 g
NH₄Cl = 1,00g
MgSO₄ x H₂O = 0,20 g
CaCl₂ x H₂O = 0,02 g
Fe(III)NH₄-Citrat = 1,20 mg
SL6 (Pfennig, N. 1974) = 0,10 ml
H₂O_{bidest} = ad 1000 ml, pH 6,9

Bei den Versuchen wurde insbesondere auf die Schnelligkeit des Wachstums und der Polymerspeicherung sowie auf verminderte Schaumbildung geachtet. Unter zusätzlicher Berücksichtigung von Literaturangaben (Haywood G.W. Anderson, A.J. & Dawes, E.A. (1989b) "A survey of the accumulation of novel polyhydroxyalkanoates by bacteria" Biotechnol. Lett. 11, 471-476;
Huisman, G.W., De Leeuw, O., Eggink, G. & Witholt, B. (1989) "Synthesis of poly-3-hydroxyalkanoates is a common feature of fluorescent pseudomonads" Appl. Environ. Microbiol. 55, 1949-1954; Timm, A. & Steinbüchel, A. (1990) "Formation of polyesters consisting of medium-chainlength 3-hydroxyalkanoic acids from gluconate by Pseudomonas aeruginosa and other fluorescent pseudomonads" Appl. Environ. 56, 3360-3367) wurden insbesondere die Stämme P.putida KT 2442, P. citronellolis, P. mendocina, P.sp. 15a und P.sp. 45C als mögliche Mikroorganismen für die Herstellung von PHF ausgewählt. In parallel durchgeführten Versuchen, in denen Glucose beziehungsweise Gluconat als Kohlenstoffquelle eingesetzt wurde, zeigte sich, daß Gluconat in der Regel das bessere Substrat für die Synthese von PHF darstellte.

Vier dieser Stämme wurden in Probefermentationen im 10 l- beziehungsweise 30 l-Maßstab angezogen (Tabelle 1). Hierbei erwies sich ein Herstellungsprozeß unter Verwendung von P. putida KT2442 und Gluconat als Kohlenstoffquelle zunächst als günstig, da der Polymergehalt in diesem Stamm schon zu einem frühen Zeitpunkt im Bereich der logarithmischen Wachstumsphase sehr hoch war. Da die anderen untersuchten Stämme erst zu einem späteren Verlauf des Wachstums PHF synthetisierten, konnte der Prozeß unter Verwendung von P. putida KT2442 mit einem weitaus geringerem Zeitaufwand durchgeführt werden. Die unter 2 und 3 aufgeführten Fermentationen der Tabelle 1 mit P. medocina und P.citronellolis erbrachten zwar höhere Ausbeuten an Zelltrockenmasse beziehungsweise PHF pro Liter Kultur, benötigten jedoch neben dem höheren Zeitaufwand größere Mengen an Nährsalzen und Gluconat. Auch P. putida KT2442 konnte zu höheren Zelldichten als die unter 5 und 6 (Tabelle 1) beschriebenen angezogen werden, wie Fermentation 1 (Tabelle 1) zeigte.

Schwierigkeiten bei der Fermentationen mit Pseudomonaden lagen in einer nahezu nicht kontrollierbaren Schaumbildung, wenn der pH-Wert des Mediums parallel mit dem Verbrauch von Natriumgluconat in einen alkalischen pH-Wertbereich überging. Es war möglich, das Schäumen der Kultur, das zu einem beträchtlichen Verlust der gebildeten Zellmasse durch Austragen der Biomasse aus dem Bioreaktor führte, durch Nachtitrieren mit konzentrierter Phosphorsäure, die Zugabe von großen Mengen Entschäumern (Polypropylenglycol, unverdünnt) und eine geringere Umdrehungszahl des Rührers zu vermindern. Die Maßnahmen bergen jedoch die Gefahr der Schädigung der Bakterien durch zu hohe Chemikalienkonzentrationen. Geringe Umdrehungszahlen des Rührwerkes führen zu geringen Sauerstoffkonzentrationen, die den Speicherungsprozeß von PHD verlangsamen oder verhindern.

### Beispiel 2:

Zur Gewinnung von PHD wurden ca. 1 kg lyophilisierte Zellen von P. putida KT2442 aus den Anzuchten Nr. 6 und 7 (Tabelle 1) im Soxhlet-Extraktor mit 7,5 l Chloroform sieben Tage extrahiert. Die PHF-haltige Chloroform-Lösung wurde im Rotationsverdampfer eingeengt und gemäß Lageveen, R.G. Huisman, G.W., Preusting, H., Ketelaar, P., Eggink, G. & Witholt, B., (1988) "Formation of polyesters by pseudomonas oleovorans: effect of substrates on formation and composition of poly-(R)-3-hydroxyalkanoates and poly-(R)-3-hydroxyalkenoates", Appl. Environ. Microbiol. 54,2924-2932, das Polymer durch Fällung im zehnfahren Volumen Ethanol isoliert. Es resultierten ca. 360 g gereinigtes PHD, was einer Ausbeute von ca. 55 % des möglichen Wertes entsprach.

Als günstigste Menge zum Pressen von Fasermaterialien wurden 3 g ermittelt, da mit dieser Menge die Kapazität der Preßzelle gut ausgenutzt war und ein Preßling genügender Stärke resultierte. Aufgrund der gummiartigen Konsistenz des PHD wurde, um eine ausreichende Verteilung des Polymers innerhalb des Fasermaterials zu gewährleisten, PHD in Chloroform gelöst und mit dieser Lösung gleichmäßig alle Fasern benetzt.

Ein Volumen von 20 ml Chloroform (im Falle von Sisal 5 ml, bei Holzwolle und Hanf 10 ml) reichten aus, um von 3 g Fasermaterial vollständig aufgenommen zu werden. Es wurden daher Lösungen von 0,5 bis 20 % (w/v) PHF (PHB- siehe Tabelle 2, PHD - siehe Tabelle 3, Gemische von PHF - siehe Tabelle 4) Chloroform hergestellt, mit dem Fasermaterial versetzt und das Lösungsmittel durch Verdunsten über Nacht entfernt. Die PHD-benetzten Fasern wurden dann unter den in Tabellen 2 bis 5 angegebenen Bedingungen gepreßt. So erwiesen sich 2 bis 10 %ige PHD-Lösungen offensichtlich als die am besten geeigneten Konzentrationen zur Herstellung von Verbundmaterialien aus PHD und Baumwollresten, Flachs oder Sisal oder Hanf. Die Preßlinge besaßen damit PHD-Anteile zwischen 11 und 40 %. Bei der Verwendung von Watte trat das Polymer schon bei geringen Konzentration aus der Zelle aus und Polymeranteile zwischen 6 und 14 % erschienen hier als günstig. Die Ergebnisse sind in Tabellen 2 bis 5 zusammengefaßt.

**Tabelle 2**

| | | | | | | | | |
|---|---|---|---|---|---|---|---|---|
| Herstellung von Probepreßlingen aus isoliertem PHB (bestehend aus 100 mol% polymerem 3-Hydroxybutyrat) und verschiedenen Fasermaterialien | | | | | | | | |

| Fasermaterial (g) | CHCl ³ (ml) | PHB (g) | Lösung (%) | Anteil PHB (%) | Druck (bar) | Zeit (min) | Temp. Zelle (°C) | Bemerkungen |
|---|---|---|---|---|---|---|---|---|
| Baumwollreste | | | | | | | | |
| 3 | 0 | 0,23 | - | 7,1 | 200 | 5 | 180 | - ohne Lösungsmittel |
| 3 | 0 | 0,30 | - | 9,1 | 200 | 5 | 180 | - ohne Lösungsmittel |
| 3 | 0 | 0,45 | - | 13,1 | 200 | 5 | 180 | +/- ohne Lösungsmittel |
| 3 | 0 | 0,60 | - | 16,7 | 200 | 5 | 180 | +/- ohne Lösungsmittel |
| 3 | 20*) | 0,5 | 2,5 | 14,3 | 200 | 5 | 180 | wäßr. Suspension |
| 3 | 20*) | 1,0 | 5,0 | 25,0 | 200 | 5 | 180 | wäßr. Suspension |
| 3 | 0 | 0 | - | 0 | 200 | 5 | 180 | - Blindprobe |
| 3 | 20 | 0,4 | 2,0 | 11,8 | 200 | 5 | 180 | ++ |
| 3 | 20 | 1,0 | 5,0 | 25,0 | 200 | 5 | 180 | +++ |
| 3 | 20 | 1,5 | 7,5 | 33,3 | 200 | 5 | 180 | +++ zuviel Polymer |
| 3 | 20 | 2,0 | 10,0 | 40,0 | 200 | 5 | 180 | +++ zuviel Polymer |
| 3 | 20 | 0,05 | 0,25 | 1,6 | 200 | 5 | 180 | - |
| 3 | 20 | 0,1 | 0,5 | 3,2 | 200 | 5 | 180 | +/- |
| 3 | 20 | 0,2 | 1,0 | 6,2 | 200 | 5 | 180 | +/- |
| 3 | 20 | 0,3 | 1,5 | 9,1 | 200 | 5 | 180 | + |
| Flachs | | | | | | | | |
| 3 | 20 | 0,33 | 1,65 | 9,9 | 200 | 5 | 180 | ++ |
| 3 | 20 | 0,75 | 3,75 | 20,0 | 200 | 5 | 180 | +++ |
| Sisal | | | | | | | | |
| 3 | 5 | 0,33 | 6,6 | 9,9 | 200 | 5 | 180 | ++ |
| 3 | 5 | 0,75 | 14,0 | 20,0 | 200 | 5 | 180 | +++ |
| Hanf | | | | | | | | |
| 3 | 10 | 0,33 | 3,3 | 9,9 | 200 | 5 | 180 | ++ |
| 3 | 10 | 0,75 | 7,5 | 20,0 | 200 | 5 | 180 | +++ |
| Holzwolle | | | | | | | | |
| 3 | 10 | 0,33 | 3,3 | 9,9 | 200 | 5 | 180 | ++ |
| 3 | 10 | 0,75 | 7,5 | 20,0 | 200 | 5 | 180 | +++ |
| Watte | | | | | | | | |
| 3 | 20 | 0,33 | 1,65 | 9,9 | 200 | 5 | 180 | ++ |
| 3 | 20 | 0,75 | 3,75 | 20,0 | 200 | 5 | 180 | +++ |
| Heu | | | | | | | | |
| 3 | 5 | 0,33 | 6,6 | 9,9 | 200 | 5 | 180 | ++ |
| 3 | 5 | 0,75 | 14,0 | 20,0 | 200 | 5 | 180 | +++ |
| Stroh | | | | | | | | |
| 3 | 5 | 0,33 | 6,6 | 9,9 | 200 | 5 | 180 | ++ |
| 3 | 5 | 0,75 | 14,0 | 20,0 | 200 | 5 | 180 | +++ |
| Sägemehl | | | | | | | | |
| 6 | 20 | 0,66 | 3,3 | 9,9 | 200 | 5 | 180 | ++ |
| 6 | 20 | 1,5 | 7,5 | 20,0 | 200 | 5 | 180 | +++ |
| Spelzen | | | | | | | | |
| 6 | 20 | 0,66 | 3,3 | 9,9 | 200 | 5 | 180 | ++ |
| 6 | 20 | 1,5 | 7,5 | 20,0 | 200 | 5 | 180 | +++ |
| Hobelspäne | | | | | | | | |
| 6 | 20 | 0,66 | 3,3 | 9,9 | 200 | 5 | 180 | ++ |
| 6 | 20 | 1,5 | 7,5 | 20,0 | 200 | 5 | 180 | +++ |
| Kiefernspäne | | | | | | | | |
| 6 | 20 | 0,66 | 3,3 | 9,9 | 200 | 5 | 180 | ++ |
| 6 | 20 | 1,5 | 7,5 | 20,0 | 200 | 5 | 180 | +++ |
| Samenreste | | | | | | | | |
| 12 | 10 | 1,32 | 13,2 | 9,9 | 200 | 5 | 180 | - Öl tritt aus |
| Haferflocken | | | | | | | | |
| 12 | 10 | 1,32 | 13,2 | 9,9 | 200 | 5 | 180 | - |
| Roggen | | | | | | | | |
| 12 | 10 | 1,32 | 13,2 | 9,9 | 200 | 5 | 180 | - |
| Kleie | | | | | | | | |
| 6 | 10 | 0,66 | 6,6 | 9,9 | 200 | 5 | 180 | + |
| Papierstreifen | | | | | | | | |
| 6 | 10 | 0,66 | 6,6 | 9,9 | 200 | 5 | 180 | ++ |
| 6 | 10 | 1,5 | 15,0 | 20,0 | 200 | 5 | 180 | +++ |
| Bewertung: - = ungeeignete; + = geeignete; ++ = gut geeignete; +++ = sehr gut geeignete; - Kombination von Fasermaterial und Polyhydroxyfettsäure(n) in Preßlinge einheitlicher Verteilung beider Komponenten und mit hoher Festigkeit herstellbar *), Lösungsmittel Wasser | | | | | | | | |

**Tabelle 3**

| | | | | | | | | |
|---|---|---|---|---|---|---|---|---|
| Herstellung von Probepreßlingen aus isoliertem PHD (bestehend aus 3 mol% polymerem 3-Hydroxyhexanoat, 20 mol% polymerem 3-Hydroxyoctanoat, 75 mol% polymerem 3-Hydroxydecanoat und 2 mol% polymerem 3 Hydroxydodecanoat) und verschiedenen Fasermaterialien | | | | | | | | |
| Der Bewertungsmaßstab entspricht der Tabelle 2. | | | | | | | | |

| Fasermaterial (g) | CHCl₃ (ml) | PHD (g) | Lösung (%) | Anteil PHD (%) | Druck (bar) | Zeit (min) | Temp. Zelle (°C) | Bemerkungen |
|---|---|---|---|---|---|---|---|---|
| Baumwollreste | | | | | | | | |
| 1 | 0 | 1,0 | - | 50,0 | 200 | 5 | 75 | - ohne Lösungsmittel |
| 3 | 0 | 0,5 | - | 14,3 | 200 | 5 | 75 | - ohne Lösungsmittel |
| 3 | 20 | 0 | 0 | 0 | 200 | 5 | 75 | - Blindprobe |
| 3 | 20 | 0,1 | 0,5 | 3,2 | 200 | 5 | 75 | - zuwenig Polymer |
| 3 | 20 | 0,2 | 1,0 | 6,2 | 200 | 5 | 75 | +/- zuwenig Polymer |
| 3 | 20 | 0,4 | 2,0 | 11,8 | 200 | 5 | 75 | ++ |
| 3 | 20 | 1,0 | 5,0 | 25,0 | 200 | 5 | 75 | +++ |
| 3 | 20 | 1,5 | 7,5 | 33,3 | 200 | 5 | 75 | +++ |
| 3 | 20 | 2,0 | 10,0 | 40,0 | 200 | 5 | 75 | +++ |
| 3 | 20 | 3,0 | 15,0 | 50,0 | 200 | 5 | 75 | +++ zuviel Polymer |
| 3 | 20 | 4,0 | 20,0 | 57,1 | 200 | 5 | 75 | +++ zuviel Polymer |
| Flachs | | | | | | | | |
| 3 | 20 | 0 | 0 | 0 | 200 | 5 | 75 | - Blindprobe |
| 3 | 20 | 0,1 | 0,5 | 3,2 | 200 | 5 | 75 | - zuwenig Polymer |
| 3 | 20 | 0,2 | 1,0 | 6,2 | 200 | 5 | 75 | +/- zuwenig Polymer |
| 3 | 20 | 0,4 | 2,0 | 11,8 | 200 | 5 | 75 | ++ |
| 3 | 20 | 1,0 | 5,0 | 25,0 | 200 | 5 | 75 | +++ |
| 3 | 20 | 1,5 | 7,5 | 33,3 | 200 | 5 | 75 | +++ |
| 3 | 20 | 2,0 | 10,0 | 40,0 | 200 | 5 | 75 | +++ |
| 3 | 20 | 3,0 | 15,0 | 50,0 | 200 | 5 | 75 | +++ zuviel Polymer |
| 3 | 20 | 4,0 | 20,0 | 57,1 | 200 | 5 | 75 | +++ zuviel Polymer |
| Sisal | | | | | | | | |
| 3 | 5 | 0 | 0 | 0 | 200 | 5 | 75 | - Blindprobe |
| 3 | 5 | 0,1 | 2 | 3,2 | 200 | 5 | 75 | - |
| 3 | 5 | 0,25 | 5 | 7,7 | 200 | 5 | 75 | +/- |
| 3 | 5 | 0,37 | 7,5 | 11,0 | 200 | 5 | 75 | + |
| 3 | 5 | 0,5 | 10 | 14,3 | 200 | 5 | 75 | +++ |
| 3 | 5 | 0,75 | 15 | 20,0 | 200 | 5 | 75 | +++ |
| 3 | 5 | 1,0 | 20 | 25,0 | 200 | 5 | 75 | +++ |
| Hanf | | | | | | | | |
| 3 | 10 | 0 | 0 | 0 | 200 | 5 | 75 | - Blindprobe |
| 3 | 10 | 0,2 | 2 | 6,2 | 200 | 5 | 75 | +/- |
| 3 | 10 | 0,5 | 5 | 14,3 | 200 | 5 | 75 | +++ |
| 3 | 10 | 0,75 | 7,5 | 20,0 | 200 | 5 | 75 | +++ |
| 3 | 10 | 1,0 | 10 | 25,0 | 200 | 5 | 75 | +++ |
| Holzwolle | | | | | | | | |
| 3 | 10 | 0 | 0 | 0 | 200 | 5 | 75 | - Blindprobe |
| 3 | 10 | 0,2 | 2 | 6,2 | 200 | 5 | 75 | - |
| 3 | 10 | 0,5 | 5 | 14,3 | 200 | 5 | 75 | + |
| 3 | 10 | 0,75 | 7,5 | 20,0 | 200 | 5 | 75 | ++ |
| 3 | 10 | 1,0 | 10 | 25,0 | 200 | 5 | 75 | +++ |
| Watte | | | | | | | | |
| 3 | 20 | 0 | 0 | 0 | 200 | 5 | 75 | - Blindprobe |
| 3 | 20 | 0,4 | 2 | 11,8 | 200 | 5 | 75 | ++ |
| 3 | 20 | 1,0 | 5 | 25,0 | 200 | 5 | 75 | +++ |
| 3 | 20 | 2,0 | 10 | 40,0 | 200 | 5 | 75 | +++ zuviel Polymer |
| 3 | 20 | 1,5 | 7,5 | 33,3 | 200 | 5 | 75 | +++ zuviel Polymer |
| Heu | | | | | | | | |
| 3 | 5 | 0 | | | 200 | 5 | 75 | - Blindprobe |
| 3 | 5 | 0,37 | 7,4 | 11,0 | 200 | 5 | 75 | ++ |
| 3 | 5 | 0,5 | 10 | 14,3 | 200 | 5 | 75 | +++ |
| Stroh | | | | | | | | |
| 3 | 5 | | | | 200 | 5 | 75 | - Blindprobe |
| 3 | 5 | 0,37 | 7,4 | 11,0 | 200 | 5 | 75 | + |
| 3 | 5 | 0,5 | 10 | 14,3 | 200 | 5 | 75 | +++ |
| Sägemehl | | | | | | | | |
| 3 | 10 | 0 | | 0 | 200 | 5 | 75 | - Blindprobe |
| 3 | 10 | 0,33 | 3,3 | 9,9 | 200 | 5 | 75 | +/- |
| 3 | 10 | 0,75 | 7,5 | 20,0 | 200 | 5 | 75 | + |
| 6 | 20 | 0,66 | 3,3 | 9,9 | 200 | 5 | 75 | + |
| 6 | 20 | 1,5 | 7,5 | 20,0 | 200 | 5 | 75 | ++ |
| Hobelspäne | | | | | | | | |
| 3 | 10 | 0 | | 0 | 200 | 5 | 75 | - Blindprobe |
| 3 | 10 | 0,33 | 3,3 | 9,9 | 200 | 5 | 75 | +/- |
| 3 | 10 | 0,75 | 7,5 | 20,0 | 200 | 5 | 75 | ++ |
| 6 | 20 | 0,66 | 3,3 | 9,9 | 200 | 5 | 75 | ++ |
| 6 | 20 | 1,5 | 7,5 | 20,0 | 200 | 5 | 75 | ++ |
| Kiefernspäne | | | | | | | | |
| 3 | 10 | 0 | | 0 | 200 | 5 | 75 | - Blindprobe |
| 3 | 10 | 0,33 | 3,3 | 9,9 | 200 | 5 | 75 | +/- |
| 3 | 10 | 0,75 | 7,5 | 20,0 | 200 | 5 | 75 | + |
| 6 | 20 | 0,66 | 3,3 | 9,9 | 200 | 5 | 75 | ++ |
| 6 | 20 | 1,5 | 7,5 | 20,0 | 200 | 5 | 75 | ++ |
| Spelzen | | | | | | | | |
| 3 | 10 | 0 | | 0 | 200 | 5 | 75 | - Blindprobe |
| 3 | 10 | 0,33 | 3,3 | 9,9 | 200 | 5 | 75 | +/- |
| 3 | 10 | 0,75 | 7,5 | 20,0 | 200 | 5 | 75 | + |
| 6 | 20 | 0,66 | 3,3 | 9,9 | 200 | 5 | 75 | ++ |
| 6 | 20 | 1,50 | 7,5 | 20,0 | 200 | 5 | 75 | ++ |
| Samenreste | | | | | | | | |
| 12 | 5 | 0 | | 0 | 200 | 5 | 75 | - Blindprobe |
| 12 | 5 | 0,33 | 6,6 | 2,7 | 200 | 5 | 75 | - Öl tritt aus |
| 12 | 5 | 0,75 | 15,0 | 5,9 | 200 | 5 | 75 | - Öl tritt aus |
| 12 | 10 | 3,00 | 30,0 | 20,0 | 200 | 5 | 75 | +/- Öl tritt aus |
| 12 | 10 | 1,37 | 13,7 | 10,2 | 200 | 5 | 75 | +/- Öl tritt aus |
| Haferflocken | | | | | | | | |
| 12 | 10 | 0 | | 0 | 200 | 5 | 75 | - Blindprobe |
| 12 | 10 | 0,33 | 3,3 | 2,7 | 200 | 5 | 75 | - |
| 12 | 10 | 0,75 | 7,5 | 5,9 | 200 | 5 | 75 | +/- |
| 12 | 10 | 1,37 | 13,7 | 10,2 | 200 | 5 | 75 | +/- |
| 12 | 10 | 3,00 | 30,0 | 20,0 | 200 | 5 | 75 | + |
| Roggen | | | | | | | | |
| 12 | 10 | 0 | | 0 | 200 | 5 | 75 | - Blindprobe |
| 12 | 10 | 1,37 | 13,7 | 10,2 | 200 | 5 | 75 | +/- |
| 12 | 10 | 3,00 | 30,0 | 20,0 | 200 | 5 | 75 | +/- |
| Kleie | | | | | | | | |
| 6 | 10 | 0 | | 0 | 200 | 5 | 75 | - Blindprobe |
| 6 | 10 | 0,66 | 6,6 | 9,9 | 200 | 5 | 75 | ++ |
| 6 | 10 | 1,50 | 15,0 | 20,0 | 200 | 5 | 75 | +/- |
| Papierstreifen | | | | | | | | |
| 6 | 10 | 0 | | 0 | 200 | 5 | 75 | - Blindprobe |
| 6 | 10 | 0,66 | 6,6 | 9,9 | 200 | 5 | 75 | +/- |
| 6 | 10 | 1,50 | 15,0 | 20,0 | 200 | 5 | 75 | ++ |

**Tabelle 4**

| | | | | | | | | |
|---|---|---|---|---|---|---|---|---|
| Herstellung von Probepreßlingen aus Polymergemischen (PHB/HV enthaltend 8 % HV) von Polyhydroxyfettsäuren und Baumwollresten | | | | | | | | |
| Der Bewertungsmaßstab entspricht der Tabelle 2. | | | | | | | | |

| Fasermaterial (g) | CHCl₃ (ml) | PHF (g) | Lösung (%) | Anteil Polymer (%) | Druck (bar) | Zeit (min) | Temp. Zelle (°C) | Bemerkungen |
|---|---|---|---|---|---|---|---|---|
| 3 | 0 | 0,23 | - | 7,1 | 200 | 5 | 150 | +/- ohne Lösungsmittel |
| 3 | 0 | 0,30 | - | 9,1 | 200 | 5 | 150 | + ohne Lösungsmittel |
| 3 | 0 | 0,45 | - | 13,0 | 200 | 5 | 150 | +++ ohne Lösungsmittel |
| 3 | 0 | 0,60 | - | 16,7 | 200 | 5 | 150 | +++ ohne Lösungsmittel |
| 3 | 20 | 0,4 | 2,0 | 11,8 | 200 | 5 | 150 | ++ |
| 3 | 20 | 1,0 | 5,0 | 25,0 | 200 | 5 | 150 | +++ |
| 3 | 20 | 1,5 | 7,5 | 33,3 | 200 | 5 | 150 | +++ |
| 3 | 20 | 2,0 | 10,0 | 40,0 | 200 | 5 | 150 | +++ zuviel Polymer |
| 3 | 20 | 0,05 | 0,25 | 1,6 | 200 | 5 | 150 | +/- |
| 3 | 20 | 0,1 | 0,5 | 3,2 | 200 | 5 | 150 | +/- |
| 3 | 20 | 0,2 | 1,0 | 6,2 | 200 | 5 | 150 | + |
| 3 | 20 | 0,3 | 1,5 | 9,1 | 200 | 5 | 150 | ++ |
| 3 | 20*) | 0,5 | - | 14,3 | 200 | 5 | 150 | ++ wäßr. Suspension |
| 3 | 20*) | 1,0 | - | 25,0 | 200 | 5 | 150 | +++ wäßr. Suspension |

**Tabelle 5**

| | | | | | | | | |
|---|---|---|---|---|---|---|---|---|
| Herstellung von Probepreßlingen aus verschiedenen Polymeren und Baumwollresten und anderen Naturstoffen | | | | | | | | |
| Der Bewertungsmaßstab entspricht der Tabelle 2. | | | | | | | | |

| Fasermaterial (g) | CHCl₃ (ml) | PHD (g) | Lösung (%) | Anteil Polymer (%) | Druck (bar) | Zeit (min) | Temp. Zelle (°C) | Bemerkungen |
|---|---|---|---|---|---|---|---|---|
| Biopol** | | | | | | | | |
| 3 | 20 | 0,4 | 2 | 13,3 | 200 | 5 | 150 | + |
| 3 | 20 | 1,0 | 5 | 33,3 | 200 | 5 | 150 | +++ |
| 3 | 20 | 1,5 | 7,5 | 50,0 | 200 | 5 | 150 | +++ zuviel Polymer |
| 3 | 20 | 2,0 | 10 | 66,7 | 200 | 5 | 150 | +++ zuviel Polymer |
| Mehl | | | | | | | | |
| 3 | 20*) | 0,33 | 1,65 | 9,9 | 200 | 5 | 100 | +/- |
| 3 | 20*) | 0,75 | 3,75 | 20,0 | 200 | 5 | 100 | +/- |
| 3 | 20*) | 0,33 | 1,65 | 9,9 | 200 | 5 | 180 | + |
| 3 | 20*) | 0,75 | 3,75 | 20,0 | 200 | 5 | 180 | ++ |
| Schrot | | | | | | | | |
| 3 | 20*) | 0,33 | 1,65 | 9,9 | 200 | 5 | 100 | +/- |
| 3 | 20*) | 0,75 | 3,75 | 20,0 | 200 | 5 | 100 | +/- |
| 3 | 20*) | 0,33 | 1,65 | 9,9 | 200 | 5 | 180 | ++ |
| 3 | 20*) | 0,75 | 3,75 | 20,0 | 200 | 5 | 180 | +++ |
| Stärke | | | | | | | | |
| 3 | 20*) | 0,33 | 1,65 | 9,9 | 200 | 5 | 100 | +/- |
| 3 | 20*) | 0,75 | 3,75 | 20,0 | 200 | 5 | 100 | +/- |
| 3 | 20*) | 0,33 | 1,65 | 9,9 | 200 | 5 | 180 | + |
| 3 | 20*) | 0,75 | 3,75 | 20,0 | 200 | 5 | 180 | ++ |

| | | | | | | | | |
|---|---|---|---|---|---|---|---|---|
| **: analog Tabelle 4 enthaltend 18 % HV | | | | | | | | |

PHD, PHB/HV mit einem Anteil von 8 mol% 3-Hydroxyvaleriansäure (3HV) und "Biopol" eines Naturstoffpolymeren mit einem Anteil von 18 mol% 3HV wurden ebenfalls in 20 ml Chloroform aufgenommen. Hierbei resultierten Suspensionen, da die Polymere schwer löslich sind.

### Beispiel 3:

Um Bakterien mit einem signifikanten Anteil PHF an der Zelltrockenmasse direkt ohne Isolierung des PHF zusammen mit Fasermaterial zu verpressen, wurden getrocknete Zellen von P. putida aus Fermentation 6 (Tabelle 1) mit einem Anteil von 62 % Polymer an der Zelltrockenmasse, im Mörser zu einem Pulver zermahlen. Dieses Pulver wurde in unterschiedlichen Mengen so gut wie möglich unter die Fasern gemischt und gepreßt. Die resultierenden Preßlinge zeigten eindeutig, daß in Zonen mit viel Zellmaterial ein Zusammenhalten gewährleistet war, während in Bereichen ohne Zellmaterial das Material sehr locker war.

Um eine bessere Verteilung zu erreichen, wurden entsprechende Mengen Zellmaterial in Chloroform suspendiert, ca. 1 Stunde auf einem Rotationschüttler inkubiert und mit den Fasern vermischt. Nach Abdampfen des Chloroforms wurde das Gemisch gepreßt. Auch hier zeigten die Preßlinge keine homogene Verteilung der Zellen wodurch kein ausreichender Zusammenhalt des Material gewährleistet war.

In einem weiteren Versuchsansatz wurden die entsprechenden Mengen getrockneter Zellen in Wasser resuspendiert, ca. 1 Stunde auf dem Rotationsschüttler inkubiert und anschließend mit dem Fasermaterial vermischt. Dieses Gemisch wurde dann über Nacht gefriergetrocknet und anschließend gepreßt. Die resultierenden Preßlinge zeigten eine homogene Verteilung von Zellen und Polymer, so daß dieses Verfahren als besonders geeignet zur Herstellung von Verbundmaterialien erscheint. Ein Mischungsverhältnis von 9 bis 30 % Zellen, entsprechend einem Polymeranteil von 6 bis 24 %, erschien für die Preßlinge als günstig. Die Ergebnisse sind in Tabelle 6 zusammengefaßt. Herstellung von Probepreßlingen aus verschiedenen Fasermaterialien

**Tabelle 6**

| | | | | | | | | |
|---|---|---|---|---|---|---|---|---|
| und getrockneten Zellen, die PHF enthalten. (Fermentation 14: PHB-Gehalt 73 %; Zusammensetzung: 10 mol% 3-Hydroxybutyrat). | | | | | | | | |
| Die Zellen wurden in dem angegebenen Volumen (ml) Wasser resuspendiert, mit den Fasern vermischt und lyophilisiert. | | | | | | | | |
| Der Bewertungsmaßstab entspricht der Tabelle 2. | | | | | | | | |

| Fasermaterial (g/ml) | Zellen (g) | PHB (g) | Anteil Zellen (%) | Anteil PHB (%) | Druck (bar) | Zeit (min) | Temp. Zelle (°C) | Bemerkungen |
|---|---|---|---|---|---|---|---|---|
| Baumwolle | | | | | | | | |
| 3 | 0,15 | 0,11 | 4,8 | 3,5 | 200 | 10 | 180 | + |
| 3 | 0,23 | 0,17 | 7,1 | 5,3 | 200 | 10 | 180 | ++ |
| 3 | 0,3 | 0,22 | 9,1 | 6,7 | 200 | 10 | 180 | ++ |
| 3 | 0,45 | 0,33 | 13,2 | 9,6 | 200 | 10 | 180 | +++ |
| Flachs | | | | | | | | |
| 3/20 | 0,50 | 0,36 | 14,3 | 10,4 | 200 | 3 | 180 | ++ |
| 3/20 | 1,16 | 0,85 | 27,9 | 20,4 | 200 | 3 | 180 | +++ |
| Sisal | | | | | | | | |
| 3/5 | 0,50 | 0,36 | 14,3 | 10,4 | 200 | 3 | 180 | ++ |
| 3/5 | 1,16 | 0,85 | 27,9 | 20,4 | 200 | 3 | 180 | +++ |
| Hanf | | | | | | | | |
| 3/10 | 0,50 | 0,36 | 14,3 | 10,4 | 200 | 3 | 180 | ++ |
| 3/10 | 1,16 | 0,85 | 27,9 | 20,4 | 200 | 3 | 180 | +++ |
| Holzwolle | | | | | | | | |
| 3/10 | 0,50 | 0,36 | 14,3 | 10,4 | 200 | 3 | 180 | ++ |
| 3/10 | 1,16 | 0,85 | 27,9 | 20,4 | 200 | 3 | 180 | +++ |
| Watte | | | | | | | | |
| 3/10 | 0,50 | 0,36 | 14,3 | 10,4 | 200 | 3 | 180 | ++ |
| 3/10 | 1,16 | 0,85 | 27,9 | 20,4 | 200 | 3 | 180 | +++ |
| Heu | | | | | | | | |
| 3/5 | 0,50 | 0,36 | 14,3 | 10,4 | 200 | 3 | 180 | ++ |
| 3/5 | 1,16 | 0,85 | 27,9 | 20,4 | 200 | 3 | 180 | +++ |
| Stroh | | | | | | | | |
| 3/5 | 0,50 | 0,36 | 14,3 | 10,4 | 200 | 3 | 180 | ++ |
| 3/5 | 1,16 | 0,85 | 27,9 | 20,4 | 200 | 3 | 180 | +++ |
| Sägemehl | | | | | | | | |
| 6/10 | 1,00 | 0,73 | 14,3 | 10,4 | 200 | 3 | 180 | ++ |
| 6/10 | 2,32 | 1,69 | 27,9 | 20,4 | 200 | 3 | 180 | +++ |
| Hobelspäne | | | | | | | | |
| 6/10 | 1,00 | 0,73 | 14,3 | 10,4 | 200 | 3 | 180 | ++ |
| 6/10 | 2,32 | 1,69 | 27,9 | 20,4 | 200 | 3 | 180 | +++ |
| Kiefernspäne | | | | | | | | |
| 6/10 | 1,00 | 0,73 | 14,3 | 10,4 | 200 | 3 | 180 | ++ |
| 6/10 | 2,32 | 1,69 | 27,9 | 20,4 | 200 | 3 | 180 | +++ |
| Spelzen | | | | | | | | |
| 6/10 | 1,00 | 0,73 | 14,3 | 10,4 | 200 | 3 | 180 | ++ |
| 6/10 | 2,32 | 1,69 | 27,9 | 20,4 | 200 | 3 | 180 | +++ |
| Samenreste | | | | | | | | |
| 12/5 | 2,00 | 1,46 | 14,3 | 10,4 | 200 | 3 | 75 | +/- |
| 12/5 | 4,64 | 3,39 | 27,9 | 20,4 | 200 | 3 | 75 | +/- |
| Haferflocken | | | | | | | | |
| 12/10 | 2,00 | 1,46 | 14,3 | 10,4 | 200 | 3 | 75 | + |
| 12/10 | 4,64 | 3,39 | 27,9 | 20,4 | 200 | 3 | 75 | + |
| Roggen | | | | | | | | |
| 12/10 | 2,00 | 1,46 | 14,3 | 10,4 | 200 | 3 | 75 | + |
| Kleie | | | | | | | | |
| 6/10 | 1,00 | 0,73 | 14,3 | 10,4 | 200 | 3 | 180 | ++ |
| 6/10 | 2,32 | 1,69 | 27,9 | 20,4 | 200 | 3 | 180 | +++ |
| Papierstreifen | | | | | | | | |
| 6/10 | 1,00 | 0,73 14,3 | | 10,4 | 200 3 180 | | | ++ |
| 6/10 | 2,32 | 1,69 27,9 | | 20,4 | 200 3 180 | | | +++ |

### Beispiel 4

Analog Beispiel 3 wurden Preßlinge aus Fasermaterialien und getrockneten Zellen, die PHD gespeichert hatten (Fermentation 6) hergestellt. Die Ergebnisse sind in Tabelle 7 zusammengefaßt.

**Tabelle 7**

| | | | | | | | | |
|---|---|---|---|---|---|---|---|---|
| Herstellung von Probepreßlingen aus verschiedenen Fasermaterialien und getrockneten Zellen, die PHF gespeichert hatten. (Fermentation 6; PHD-Gehalt 62 % mit der Zusammensetzung 3 mol % 3-Hydroxyhexanoat, 20 mol% 3-Hydroxyoctanoat, 75 mol% 3-Hydroxydecanoat und 2 mol% 3-Hydroxydecanoat). | | | | | | | | |
| Der Bewertungsmaßstab entspricht der Tabelle 2. | | | | | | | | |

| Fasermaterial (g/ml) | Zellen (g) | PHD (g) | Anteil Zellen (%) | Anteil PHD (%) | Druck (bar) | Zeit (min) | Temp. Zelle (°C) | Bemerkungen |
|---|---|---|---|---|---|---|---|---|
| Baumwollreste | Getrocknete Zellen aus Fermentation 6 wurden in Fasermaterial verteilt | | | | | | | |
| 3/20 | 0,15 | 0,09 | 4,8 | 2,9 | 200 | 10 | 75 | - keine homogene Verteilung |
| 3/20 | 9,23 | 0,14 | 7,1 | 4,3 | 200 | 10 | 75 | +/- keine homogene Verteilung |
| 3/20 | 0,30 | 0,19 | 9,1 | 5,7 | 200 | 10 | 75 | +/- keine homogene Verteilung |
| 3/20 | 0,45 | 0,28 | 13,0 | 8,1 | 200 | 10 | 75 | - keine homogene Verteilung |
| 3/20 | 0,60 | 0,37 | 16,7 | 11,3 | 200 | 10 | 75 | + keine homogene Verteilung |
| | Zellen aus Fermentation 6 wurden in 10 ml Chloroform resuspendiert, mit den Fasern vermischt und nach dem Trocknen gepresst. | | | | | | | |
| 3/20 | 0,15 | 0,09 | 4,8 | 2,9 | 200 | 10 | 75 | - keine homogene Verteilung |
| 3/20 | 0,23 | 0,14 | 7,1 | 4,3 | 200 | 10 | 75 | - keine homogene Verteilung |
| 3/20 | 0,30 | 0,19 | 9,1 | 5,7 | 200 | 10 | 75 | - keine homogene Verteilung |
| 3/20 | 0,45 | 0,28 | 13,0 | 8,1 | 200 | 10 | 75 | +/- keine homogene Verteilung |
| 3/20 | 0,60 | 0,37 | 16,7 | 11,3 | 200 | 10 | 75 | + keine homogene Verteilung |
| | Zellen aus Fermentation 6 wurden in 10 ml Wasser resuspendiert, mit den Fasern vermischt und lyophilisiert. | | | | | | | |
| 3/20 | 0 | 0 | 0 | 0 | 200 | 10 | 75 | - Blindprobe |
| 3/20 | 0,15 | 0,09 | 4,8 | 2,9 | 200 | 10 | 75 | - |
| 3/20 | 0,23 | 0,14 | 7,1 | 4,3 | 200 | 10 | 75 | +/- |
| 3/20 | 0,30 | 0,19 | 9,1 | 5,7 | 200 | 10 | 75 | + |
| 3/20 | 0,45 | 0,28 | 13,0 | 8,1 | 200 | 10 | 75 | ++ |
| 3/20 | 0,60 | 0,37 | 16,7 | 11,3 | 200 | 10 | 75 | +++ |
| 3/20 | 0,90 | 0,56 | 23,1 | 14,3 | 200 | 10 | 75 | +++ |
| 3/20 | 1,2 | 0,74 | 28,6 | 17,6 | 200 | 10 | 75 | +++ |
| Flachs | | | | | | | | |
| 3/20 | 0 | 0 | 0 | 0 | 200 | 10 | 75 | - Blindprobe |
| 3/20 | 0,15 | 0,09 | 4,8 | 2,9 | 200 | 10 | 75 | - Blindprobe |
| 3/20 | 0,23 | 0,14 | 7,1 | 4,3 | 200 | 10 | 75 | +/- |
| 3/20 | 0,30 | 0,19 | 9,1 | 5,7 | 200 | 10 | 75 | + |
| 3/20 | 0,45 | 0,28 | 13,0 | 8,1 | 200 | 10 | 75 | ++ |
| 3/2C | 0,60 | 0,37 | 16,7 | 11,3 | 200 | 10 | 75 | +++ |
| 3/20 | 0,90 | 0,56 | 23,1 | 14,3 | 200 | 10 | 75 | +++ |
| 3/20 | 1,2 | 0,74 | 28,6 | 17,6 | 200 | 10 | 75 | +++ |
| 3/20 | 0,58 | 0,36 | 16,2 | 10,0 | 200 | 3 | 75 | ++ |
| 3/20 | 1,45 | 0,90 | 32,6 | 20,2 | 200 | 3 | 75 | +++ |
| Sisal | | | | | | | | |
| 3/5 | 0,58 | 0,36 | 16,2 | 10,0 | 200 | 3 | 75 | ++ |
| 3/5 | 1,45 | 0,90 | 32,6 | 20,2 | 200 | 3 | 75 | +++ |
| Hanf | | | | | | | | |
| 3/10 | 0,58 | 0,36 | 16,2 | 10,0 | 200 | 3 | 75 | ++ |
| 3/10 | 1,45 | 0,90 | 32,6 | 20,2 | 200 | 3 | 75 | +++ |
| Holzwolle | | | | | | | | |
| 3/10 | 0,58 | 0,36 | 16,2 | 10,0 | 200 | 3 | 75 | + |
| 3/10 | 1,45 | 0,90 | 32,6 | 20,2 | 200 | 3 | 75 | +++ |
| Watte | | | | | | | | |
| 3/10 | 0,58 | 0,36 | 16,2 | 10,0 | 200 | 3 | 75 | ++ |
| 3/10 | 1,45 | 0,90 | 32,6 | 20,2 | 200 | 3 | 75 | +++ |
| Heu | | | | | | | | |
| 3/5 | 0,58 | 0,36 | 16,2 | 10,0 | 200 | 3 | 75 | + |
| 3/5 | 1,45 | 0,90 | 32,6 | 20,2 | 200 | 3 | 75 | +++ |
| Stroh | | | | | | | | |
| 3/5 | 0,58 | 0,36 | 16,2 | 10,0 | 200 | 3 | 75 | + |
| 3/5 | 1,45 | 0,90 | 32,6 | 20,2 | 200 | 3 | 75 | +++ |
| Sägemehl | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |
| Hobelspäne | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |
| Kiefernspäne | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |
| Spelzen | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |
| Samenreste | | | | | | | | |
| 12/5 | 2,32 | 1,44 | 16,2 | 10,0 | 200 | 3 | 75 | + |
| 12/5 | 5,80 | 3,60 | 32,6 | 20,2 | 200 | 3 | 75 | ++ |
| Haferflocken | | | | | | | | |
| 12/10 | 2,32 | 1,44 | 16,2 | 10,0 | 200 | 3 | 75 | + |
| 12/10 | 5,80 | 3,60 | 32,6 | 20,2 | 200 | 3 | 75 | ++ |
| Roggen | | | | | | | | |
| 12/10 | 2,32 | 1,44 | 16,2 | 10,0 | 200 | 3 | 75 | + |
| 12/10 | 5,80 | 3,60 | 32,6 | 20,2 | 200 | 3 | 75 | ++ |
| Kleie | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |
| Papierstreifen | | | | | | | | |
| 6/10 | 1,16 | 0,72 | 16,2 | 10,0 | 200 | 3 | 75 | ++ |
| 6/10 | 2,90 | 1,80 | 32,6 | 20,2 | 200 | 3 | 75 | +++ |

### Beispiel 5:

Analog dem Vorgehen aus Beispiel 3 wurde die Kulturbrühe von Bakterien direkt, daß heißt ohne Lyophilisieren und nachfolgendem Resuspendieren mit dem Fasermaterial vermischt, gefriergetrocknet und anschließend verpreßt. Geeignete Mikroorganismen sind der Tabelle 8 zu entnehmen.

**Tabelle 8**

| | | | |
|---|---|---|---|
| Der Bewertungsmaßstab entspricht der Tabelle 2. | | | |

| Bakterium | Substrat | Faseranteil | Bewertung |
|---|---|---|---|
| - | - | Baumwollreste | - |
| Rh.ruber | Glucose | Baumwollreste | +++ |
| Rh.ruber | Glucose | Baumwollreste | + |
| M.extorquens B65 | Methanol | Baumwollreste | + |
| M.extorquens B65 | Methanol | Baumwollreste | +/- |
| M.rhodesianum | Methanol | Baumwollreste | +/- |
| A.eutrophus H16 | Gluconat | Baumwollreste | ++ |
| A.eutrophus H16 | Gluconat | Baumwollreste | ++ |
| P.sp.GP4BH1 | Gluconat | Baumwollreste | +++ |
| P.sp.DSM1650 | Gluconat | Baumwollreste | +++ |
| P.putida KT2440 | Gluconat | Baumwollreste | - |
| P.putida KT2440 | Octanoat | Baumwollreste | - |

Bei zusätzlichem Aufschluß der Mikroorganismen vor dem Vermischen durch Behandlung mit Ultraschall zeigten die Preßlinge aus Ansätzen mit M. extorquens B65 "++".

### Beispiel 6:

Zur Untersuchung der Verwertung von Cellulosesubstraten von zur Speicherung von PHF befähigten Bakterien gemäß Beispiel 5, wurden diese auf verschiedenen cellulosehaltigen Materialien angezogen. In flüssiges Mineralmedium wurden verschiedene autoklavierte Fasermaterialien gegeben und mit Bakterien von frischen NB-Agarkulturen angeimpft. Anhand der zunehmenden Trübung der Lösung, die auch durch das Wachstum der Bakterien hervorgerufen sein konnte, wurde auf ein verwertbares Substrat in der Nährlösung geschlossen werden. Die Ergebnisse sind in Tabelle 9 zusammengefaßt.

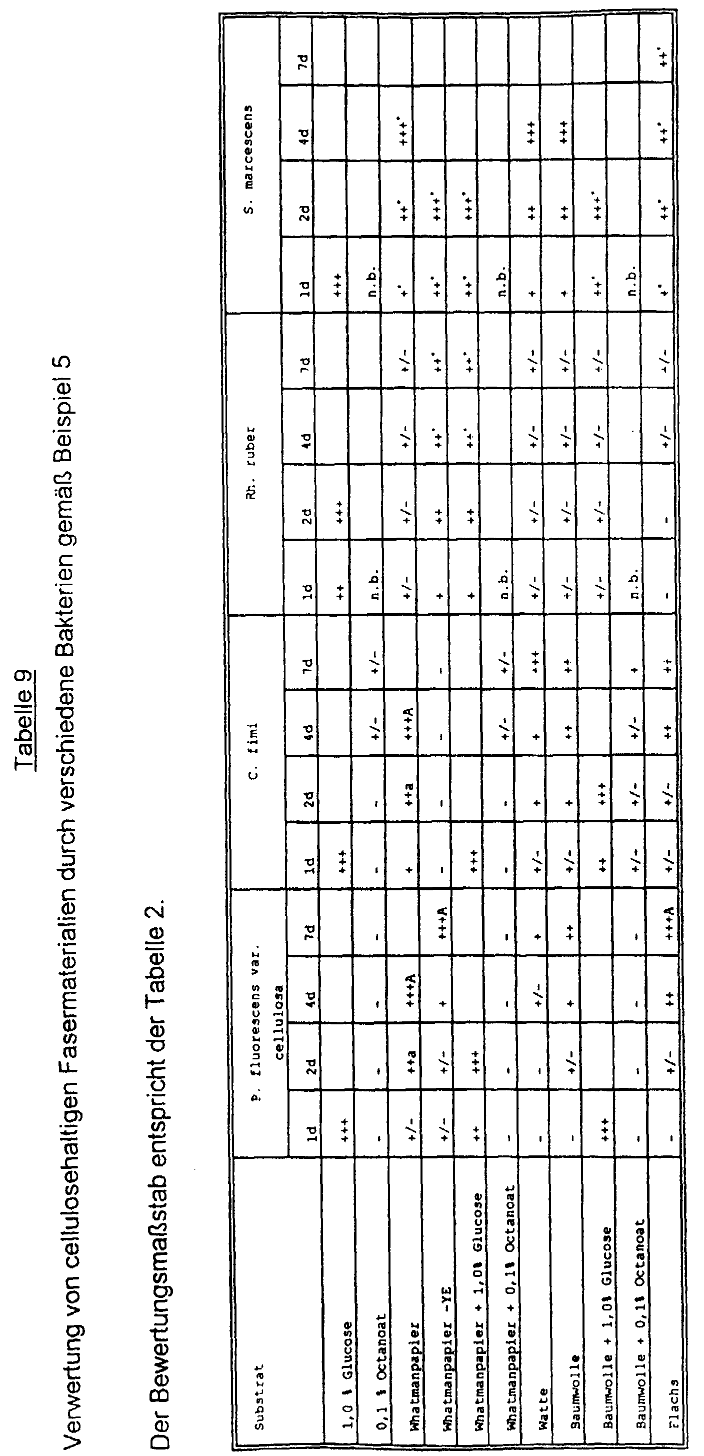

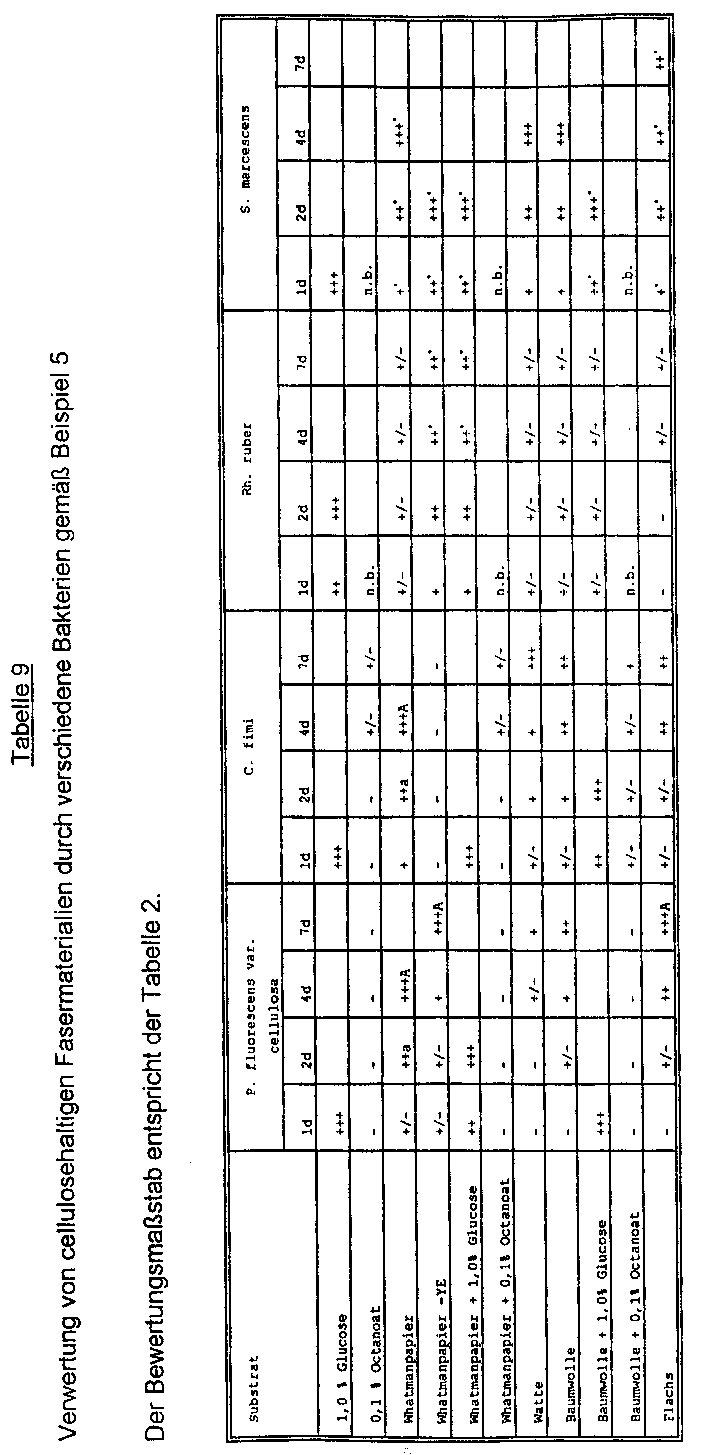

Die vollständige Zersetzung von Cellulosematerial wurde nur bei P. fluorescens var. cellulosa und Cellulomonas fimi bei Anzucht auf bestimmten Substraten beobachtet (Tabelle 9). Von den untersuchten Substraten wurden insbesondere Whatmanpapier (spezielles Laborlöschpapier) und Laserausdrucke auf weißem Papier von beiden Organismen innerhalb von vier Tagen vollständig aufgelöst und abgebaut. Innerhalb von einer Woche löste P. fluorescens var. cellulosa auch Flachs auf. Weitere nutzbare Substrate sind Illustriertenpapier und Recycling-Papierhandtücher, wohingegen bei Baumwollresten, Watte, Sisal, Holzwolle und anderen Substraten keine Auflösungserscheinungen innerhalb von einer Woche erkennbar waren (Tabelle 9). Teilweise war allerdings auch auf den makroskopisch nicht zersetzten Substraten ein Wachstum der Kultur in Form von einer Trübungszunahme erkennbar (Tabelle 9). Octansäure hemmt das Wachstum beider Bakterien. Ohne Hefeextrakt konnte C. fimi nicht wachsen, das Wachstum von P. fluorescens var. cellulosa war ohne Hefeextrakt verlangsamt (Tabelle 9).

Das mikroskopische Bild zeigte, daß sich P. fluorescens var. cellulosa während des Wachstums an die Cellulosefasem anheftete, während dies bei C. fimi nicht der Fall war. Beide Stämme wurden als celluloseverwertende Referenzstämme von der Deutschen Sammlung von Mikroorganismen (DSM) bezogen. C. fimi speicherte auf allen getesteten Substraten kein PHF, während P. fluorescens var. cellulosa nur äußerst geringe Mengen PHD (ca. 1 % der Zelltrockenmasse synthetisierte. Dieser geringe Anteil reichte nicht zum Verkleben von Fasern aus.

Bei allen anderen untersuchten Bakterien, die ein geringfügiges Wachstum auf den getesteten Substraten zeigten, blieb das Cellulosematerial makroskopisch unverändert, der Zellertrag war niedrig und PHF konnten gaschromatographisch nicht nachgewiesen werden (Tabelle 9). Da die meisten der eingesetzten Materialien Naturstoffe darstellen (Sisal, Flachs, Stroh, Heu) oder anderweitig heterogen zusammengesetzt sind (Baumwollreste, bedrucktes Papier), enthalten diese eine Vielzahl von Substanzen neben dem Grundstoff Cellulose. Diese werden möglicherweise durch verschiedene Bakterien verwertet und als Wachstumssubstrat genutzt. Desweiteren führen chemische Aufbereitungsprozesse bei der Herstellung der Endprodukte möglicherweise zu einer leichteren oder erschwerten Verwertbarkeit. Die Ursache für das beobachtete Zellwachstum einiger Pseudomonaden auf Baumwollresten, Whatmanpapier oder Flachs durch einen Abbau von Cellulose oder von Verunreinigungen innerhalb des Fasermaterials beruht, könnte daher nur durch vollständige Zersetzung der Cellulose belegt werden. Da Cellulose aus kristallinen und amorphen Bereichen besteht, die unterschiedlich gut durch Bakterien verwertet werden können, ist möglicherweise auch der Anteil dieser Bereiche innerhalb der Fasern für eine eingeschränkte Verwertbarkeit und ein eingeschränktes Wachstum verantwortlich. Eine Behandlung der Cellulosefasern, beispielsweise durch Natronlauge, vor der Verwendung als Substrat sollte die Verwertbarkeit fördern.

Wurden die oben beschriebenen Kulturen, die Fasermaterialien enthalten, mit Glucose nachgefüttert, setzte sofortiges Wachstum ein und die unterschiedlichen Stämme waren nach etwa 24 Stunden ausgewachsen. Granulate aus akkumulierten Polymeren waren dann nach 24 bis 48 Stunden unter dem Mikroskop im Phasenkontrast sichtbar. Bezüglich des makroskopischen Erscheinungsbildes konnten deutlich zwei Formen unterschieden werden. Die Mehrzahl der Kulturen enthielt dann homogene Bakteriensupensionen, in denen die Zellen nicht an den Fasern anhafteten. Einige wenige Stämme bildeten dagegen sowohl Aggregate, die nur aus Zellen bestehen, wie auch Aggregate, die aus Zellen und Fasern bestehen. Dies sind P.sp. GP4BH1, das PHB und PHD speichern kann (Steinbüchel und Wiese (1992) "A Pseudomonas strain accumulating polyesters of 3-hydroxybutyric acid and medium-chain-length 3-hydroxyalkanoic acids" Appl. Microbil. Biotechnol. 37, 691-697) und Rhodococcus ruber in der Fähigkeit zur Akkumulation von PHB/HV. Im Falle von Rh. ruber forderte die Zugabe von Thiamin oder Hefeextrakt als Supplinen das Wachstum. Die Ergebnisse sind in der Tabelle 10 zusammengefaßt.

**Tabelle 10**

| | | | |
|---|---|---|---|
| Der Bewertungsmaßstab entspricht der Tabelle 2. | | | |

| Bakterium | Substrat | Faseranteil | Bewertung/Bemerkungen |
|---|---|---|---|
| Rh. ruber | Glucose | Flachs | +++ |
| Rh. ruber | Glucose | Watte | ++ |
| Rh. ruber | Glucose | Baumwollreste | ++ |
| Rh. ruber | Glucose | Flachs | +++ |
| M. extroquens B65 | Methanol | Flachs | +++ |
| M. extroquens B65 | Methanol | Flachs | +++ |
| M. extroquens B65 | Methanol | Baumwollreste | ++ |
| M. extroquens B65 | Methanol | Baumwollreste | + |
| M. rhodesianum | Methanol | Baumwollreste | +++ |
| M. rhodesianum | Methanol | Baumwollreste | + |
| P. sp. GP4BH1 | Gluconat | Flachs | + |
| P. sp. GP4BH1 | Gluconat | Baumwollreste | +++ |
| P. putida KT2440 | Gluconat | Baumwollreste | - |
| P. citronellolis | Gluconat | Baumwollreste | - |
| A. eutrophus H16 | Gluconat | Baumwollreste | +++ |
| A. eutrophus H16 | Gluconat | Baumwollreste (t=48h) | +++ |
| A. eutrophus H16 | Gluconat | Baumwollreste | +++ |
| A. eutrophus H16 | Gluconat | Baumwollreste (t=48h) | +++ |
| A. eutrophus H16 | Gluconat | Watte | +++ |
| A. eutrophus H16 | Gluconat | Holzwolle | +++ |
| A. eutrophus H16 | Gluconat | Flachs | +++ |
| A. eutrophus H16 | Gluconat | Sisal | +++ |

## Claims

1. A process for the preparation of a composite material made of a fibrous material and binders in the form of a polymer of hydroxyfatty acids the monomers of which are derived from saturated or unsaturated 3-hydroxyfatty acids having from 4 to 16 carbon atoms in the fatty acid residue, characterized in that microorganisms producing said polymer of hydroxyfatty acids are grown in the presence of fibrous material and another carbon source, the bacteria are harvested along with the fibers, and pressed in a dried or moist condition, optionally using additional fibrous materials, into composite materials.

2. The process according to claim 1, characterized in that microorganisms producing polymers of hydroxyfatty acids are grown in the presence of fibrous material without another carbon source, the bacteria utilizing part of the fibrous material as a carbon source, the bacteria are harvested along with the fibers, and pressed in a dried or moist condition, optionally using additional fibrous materials, into composite materials.

3. The process according to claims 1 or 2, characterized in that a PHF-synthesis gene expressing recombinant microorganism is used as said microorganism.

4. The process according to any of claims 1 to 3, characterized in that said polymer of hydroxyfatty acids is derived from monomers of one or more different hydroxyfatty acids.

5. The process according to claim 4, characterized in that said polymer of hydroxyfatty acids is selected from poly(3-hydroxybutyric acid) (PHB), poly(3-hydroxybutyric acid/3-hydroxyvaleric acid) copolymer (PHB/HV) and poly(3-hydroxydecanoic acid), or mixtures thereof.

6. The process according to any of claims 1 to 5, characterized in that said composite material contains from 5 to 50% by weight, preferably from 10 to 35% by weight, of said polymer of hydroxyfatty acids.

7. The process according to any of claims 1 to 6, characterized in that said fibrous material is selected from flax, sisal, hemp, wood wool, mechanical wood pulp, wood fibers, coirs, leather, cotton wad, hay, straw, sawdust, wood shavings, pine chips, glumes of grains, seed scraps, oat flakes, cereals, bran, paper strips, cotton scraps, synthetic fibers, such as polybutylene terephthalates, polyethylene terephthalates, nylon 6, nylon 66, nylon 12, viscose and rayon.

8. Use of a composite material made of a fibrous material and binders in the form of a polymer of hydroxyfatty acids according to any of claims 1 to 7 for the preparation of molded parts in the automobile field, in particular, for acoustic attenuation in the areas of the hood, bulkhead (on both sides), tunnel, door, roof, footwell, pumps, A to D pillars and air distribution duct, and as an optionally self-supporting base for interior trims, especially for instrument panel covers, tunnel linings, door trims, seat back linings, A to D pillar linings and spare wheel covers, and as parts with a double function, especially as roof liner, rear shelf, filling piece, trunk mat or undershield.

## Patentansprüche

1. Verfahren zur Herstellung eines Verbundwerkstoffes aus Fasermaterial und Bindemittel aus einem Polymer von Hydroxyfettsäuren, deren Monomere abgeleitet sind von gesättigten oder ungesättigten 3-Hydroxyfettsäuren mit 4 bis 16 Kohlenstoffatomen im Fettsäurerest, dadurch gekennzeichnet, daß das Polymer aus Hydroxyfettsäuren-produzierende Mikroorganismen in Anwesenheit von Fasermaterial und einer weiteren Kohlenstoffquelle angezogen, die Bakterien mitsamt den Fasern geerntet und im getrockneten oder feuchten Zustand, gegebenenfalls unter Einsatz weiteren Fasermaterials zu Verbundwerkstoffen gepreßt werden.

2. Verfahren nach Anspruch 1, dadurch gekennzeichnet, daß Polymere aus Hydroxyfettsäuren-produzierende Mikroorganismen in Anwesenheit von Fasermaterial ohne weitere Kohlenstoffquelle angezogen werden, wobei die Bakterien einen Teil des Fasermaterials als Kohlenstoffquelle verwerten, die Bakterien mit samt den Fasern geerntet werden und im getrockneten oder feuchten Zustand, gegebenenfalls unter Einsatz weiteren Fasermaterials zu Verbundwerkstoffen gepreßt werden.

3. Verfahren nach Ansprüchen 1 oder 2, dadurch gekennzeichnet, daß als Mikroorganismus ein PHF-Synthesegenexprimierender rekombinater Mikroorganismus eingesetzt wird.

4. Verfahren nach einem der Ansprüche 1 bis 3, dadurch gekennzeichnet, daß man das Polymer von Hydroxyfettsäuren aus Monomeren einer oder verschiedener Hydroxyfettsäure(n) einsetzt.

5. Verfahren nach Anspruch 4, dadurch gekennzeichnet, daß man das Polymer von Hydroxyfettsäuren aus Poly-3-hydroxybuttersäure (PHB), Copolymer Poly-3-hydroxybuttersäure-3-Hydroxyvaleriansäure (PHB/HV) und Poly-3-hydroxydecansäure oder Gemische derselben einsetzt.

6. Verfahren nach einem der Ansprüche 1 bis 5, dadurch gekennzeichnet, daß man 5 bis 50 Gew.-%, insbesondere 10 bis 35 Gew.-% an Polymer von Hydroxyfettsäuren des Verbundwerkstoffs einsetzt.

7. Verfahren nach einem der Ansprüche 1 bis 6, dadurch gekennzeichnet, daß das Fasermaterial ausgewählt ist aus Flachs, Sisal, Hanf, Holzwolle, Holzschliff, Holzfasern, Kokosfasern, Leder, Watte, Heu, Stroh, Sägemehl, Hobelspänen, Kiefernspänen, Spelzen, Samenresten, Haferflocken, Getreide, Kleie, Papierstreifen, Baumwollresten, Kunstfasern wie Polybutylenterephthalate, Polyethylenterephthalate, Nylon 6, Nylon 66, Nylon 12, Viskose und Rayon.

8. Verwendung eines Verbundwerkstoffes aus Fasermaterial und Bindemittel aus einem Polymer von Hydroxyfettsäuren nach einem der Ansprüche 1 bis 7 zur Herstellung von Formteilen im Automobilbereich, insbesondere zur akustischen Dämpfung in den Bereichen Motorhaube, Stirnwand (beidseitig), Tunnel, Tür, Dach, Fußraum, Pumpen, A- bis D-Säule und Lüftungskanal und als gegebenenfalls selbsttragende Basis für Innenauskleidungen, insbesondere für Armaturenabdeckungen, Tunnelverkleidungen, Türverkleidungen, Rückenlehnenverkleidungen A- bis D-Säulenverkleidungen und Reserveradabdeckungen sowie als Teile mit Doppelfunktion, insbesondere als Dachhimmel, Hutablage, Füllstück, Kofferraummatte oder Radhausverkleidung.

## Revendications

1. Procédé de préparation d'un matériau composite à partir d'une matière fibreuse et d'un liant constitué d'un polymère d'acides gras hydroxylés, dont les monomères dérivent d'acides gras 3-hydroxylés, saturés ou insaturés ayant de 4 à 6 atomes de carbone dans le résidu acide gras, caractérisé en ce que le polymère est obtenu à partir de micro-organismes produisant des acides gras hydroxylés, en présence d'une matière fibreuse et d'une autre source de carbone, les bactéries sont récoltées en même temps que les fibres, et, à l'état séché ou humide, et éventuellement par utilisation d'autres matières fibreuses, sont pressées pour donner des matériaux composites.

2. Procédé selon la revendication 1, caractérisé en ce que le polymère est tiré de micro-organismes produisant des acides gras hydroxylés, en présence d'une matière fibreuse sans autre source de carbone, les bactéries valorisant une partie de la matière fibreuse en tant que source de carbone, les bactéries étant récoltées en même temps que les fibres et, à l'état séché ou humide, et éventuellement par utilisation d'autres matières fibreuses, étant pressées pour donner des matériaux composites.

3. Procédé selon les revendications 1 ou 2, caractérisé en ce qu'on utilise en tant que microorganisme un microorganisme recombinant exprimant le gène de synthèse des acides gras polyhydroxylés PHF.

4. Procédé selon l'une des revendications 1 à 3, caractérisé en ce que l'on utilise le polymère d'acides gras hydroxylés obtenu à partir de monomères d'un ou plusieurs acides gras hydroxylés différents.

5. Procédé selon la revendication 4, caractérisé en ce qu'on utilise le polymère d'acides gras hydroxylés obtenu à partir d'acide poly-3-hydroxybutyrique (PHB), le copolymère poly(acide 3-hydroxybutyrique/acide 3-hydroxyvalérique) (PHB/HV) et le poly(acide 3-hydroxydécanoïque) ou des mélanges de ceux-ci.

6. Procédé selon l'une des revendications 1 à 5, caractérisé en ce qu'on utilise de 5 à 50 % en poids et en particulier de 10 à 35 % en poids de polymère d'acides gras hydroxylés, par rapport au matériau composite.

7. Procédé selon l'une des revendications 1 à 6, caractérisé en ce que le matériau fibreux est choisi parmi le lin, le sisal, le chanvre, la laine de bois, la pâte mécanique, les fibres de bois, les fibres de coprah, le cuir, l'ouate de cellulose, le foin, la paille, la sciure, les copeaux de rabotage, les copeaux de sapin, les glumes, les résidus de graines, les flocons d'avoine, les céréales, le son, les bandes de papier, les résidus de coton, les fibres synthétiques telles que le poly(téréphtalate de butylène), le poly(téréphtalate d'éthylène), le Nylon 6, le Nylon 66, le Nylon 12, la viscose et la rayonne.

8. Utilisation d'un matériau composite constitué d'un matériau fibreux et d'un liant constitué d'un polymère d'acides gras hydroxylés selon l'une des revendications 1 à 7 pour fabriquer des objets façonnés dans le secteur de l'automobile, en particulier pour l'amortissement acoustique dans les secteurs capot moteur, paroi latérale (des deux côtés), tunnel, portières, toit, plancher, pompes, colonnes A à D et gaine de ventilation, et éventuellement en tant que base autoportante pour garnitures intérieures, en particulier pour revêtements de tableau de bord, revêtements de tunnel, garnitures de portières, garnitures de dossier de siège, garnitures de colonnes A à D et garnitures de la roue de secours, et aussi en tant qu'éléments à fonction double, en particulier en tant que garniture intérieure de pavillon, plage arrière, cales de remplissage, tapis de coffre ou revêtement de passage de roue.
